# EUROPÄISCHE PATENTSCHRIFT

(11) **EP 1 431 695 B1**
(45) Veröffentlichungstag und Bekanntmachung des Hinweises auf die Patenterteilung: **18.08.2010**
(21) Anmeldenummer: 03028888.0
(22) Anmeldetag: 16.12.2003
(51) Int. Cl.: F28D 20/00, F24D 11/00

(54) **Wasserspeicher**
Water storage container
Contenant de stockage d'eau

(30) Priorität: 18.12.2002 DE 10259643
(43) Veröffentlichungstag der Anmeldung: 23.06.2004
(73) Patentinhaber: Geotex Ingenieurgesellschaft für Strassen- und Tiefbau mbH, 81825 München (DE)
(72) Erfinder: Mohr, Peter, 81825 München (DE)
(74) Vertreter: Metten, Karl-Heinz

(56) Entgegenhaltungen:
- DE-A1- 4 341 858
- DE-A1- 19 929 692
- DE-A1- 19 945 053
- GB-A- 2 037 421
- GB-A- 2 070 762

## Beschreibung

Die Erfindung betrifft einen Wärmespeicher zur Speicherung von Wärmeenergie gemäss dem Oberbegriff des Patentanspruchs 1. Ein derartiger Wärmespeicher ist zum Beispiel aus der GB-A-2 037 421 bekannt. Die Erfindung betrifft ferner ein Verfahren zur Herstellung des Wärmespeichers nach Anspruch 1.

Wärmespeicher sind in unterschiedlicher Ausgestaltung dem Fachmann bereits bekannt. Der Einsatz von Wärmespeichern bietet sich regelmäßig immer dann an, wenn thermische Energie in einer Menge vorhanden ist, die den aktuellen Bedarf übersteigt. Beispielsweise kann über Solaranlagen gewonnene Energie mit Hilfe von Wärmespeichern auch für die kältere Jahreszeit oder kalte Wetterperioden einsetzbar gemacht werden. Herkömmliche Wärmespeicher werden in der Regel aus einem unterirdischen Speicherbecken gebildet, in dem sich das Speichermedium befindet. Ein solcher Wärmespeicher kann gemäß DE-OS 29 48 099 vollständig mit einer Abdichtfolie umgeben sein, welche auf eine Wärmedämmung aufgelegt ist. Die Wärmedämmung dieses Wärmespeichers besteht aus zwei Lagen neben- bzw. aufeinandergelegter Wärmedämmplatten. Jede Wärmedämmplatte ist mit einer Folie umgeben. Die Anbringung und Herstellung der Wärmedämmung gemäß DE-OS 29 48 099 ist allerdings aufwendig und kostenintensiv. Ferner lassen sich zwischen den einzelnen Wärmedämmplatten Wärmebrücken nicht vermeiden, so daß mit den vorgeschlagenen Wärmespeichern ein reduzierter Wirkungsgrad in Kauf zu nehmen ist.

In der DE 199 45 053 A1 wird ein Wärmespeicher beschrieben umfassend eine das Speichermedium umgebende wasserdichte Abdichtschicht und eine das Speicherbecken zum Boden hin umschließende Wärmedämmung. Durch Verwendung einer Wärmedämmung aus wärmeisolierendem Schüttgut, das in eine verlorene Schalung eingebracht wird, soll ein kostengünstiger Wärmespeicher zugänglich werden, der zudem keine Wärmebrücken zuläßt und dadurch über eine bessere Wärmedämmung verfügt. In einer Ausgestaltung ist gemäß der DE 199 45 053 A1 je eine wassertrennende Folie oberhalb und unterhalb der wärmeisolierende Schüttgutschicht anzuordnen, die auf dem als Speichermedium dienenden Wasser schwimmt. Indem die DE 199 45 053 A1 insbesondere für die Seitenwände vorsieht, die Schalungszwischenräume durch schlauch- oder kissenartige Behältnisse, die nebeneinander anzuordnen sind, zu bilden, die über eine Wärmedämmung aus mineralischem Schüttgut wie Blähglas, Perlitten oder dergleichen verfügen, gestaltet sich die Herstellung der vorgeschlagenen Wärmespeicher sehr aufwendig. Auch hat sich herausgestellt, daß insbesondere größere Wärmespeicher kaum oder nur sehr aufwendig realisierbar sind, insbesondere wenn oberhalb der Abdeckung Erdreich oder Teiche oder dergleichen angebracht werden sollen.

Zur wirkungsvollen Speicherung von Wärmeenergie über einen längeren Zeitraum sind regelmäßig sehr große Wärmespeicher erforderlich. Aus Gründen der Statik bestehen diese bislang häufig noch aus Betonbecken und Betondecke, welche die Tragefunktion für den Behälter übernehmen. Die Herstellung von Betonbecken zur Speicherung des erwärmten Wassers ist allerdings bei Anwendung konventioneller Techniken sehr kostenintensiv. Da Betonwände zumeist senkrecht ausgeführt werden, muß z.B. für den Fall einer Entleerung der Wasserfüllung der volle Erddruck berücksichtigt werden. Neben einer zusätzlichen Wärmeisolierung ist bei diesen Wärmespeichern zur vollständigen Abdichtung zumeist auch eine zusätzliche Abdichtfolie vorzusehen. Derartige Wärmespeicher sind daher sehr aufwendig herzustellen, benötigen beispielsweise den Einsatz von Spundwänden, und sind aufgrund der Alterung des Beton- bzw. Stahlbetonmaterials nur über eine relativ geringe Dauer ohne größere Reparaturen oder Instandsetzungen einsetzbar.

Um den statischen Problemen, die mit der Verwendung von beispielsweise aus Stahlbeton hergestellten Wärmespeichern einhergehen, zu begegnen, wird gemäß DE 199 29 692 A1 ein Wärmespeicher vorgeschlagen, bei dem das Wärmespeichermedium selber eine statisch tragende Funktion übernimmt. Als geeignetes Speichermedium wird z.B. abgestellt auf das Wiederbefüllen des Speichers mit dem Bodenaushub des Speicherbeckens. Zur Abdichtung dieses Wärmespeichers kommt dann eine dünne wasserdichte Schicht zum Einsatz, die mit Erde überschüttet werden kann. Der Wirkungsgrad solcher Speicher ist allerdings eher gering.

Es wäre wünschenswert auf Wärmespeicher zurückgreifen zu können, die nicht mit den Nachteilen des Standes der Technik behaftet sind. Der vorliegenden Erfindung lag demgemäß die Aufgabe zugrunde, Wärmespeicher zur Verfügung zu stellen, die sich durch eine kostengünstige Bauweise auszeichnen, welche an vielfältige örtliche Gegebenheiten angepaßt werden kann, und wobei sich auf einfache Weise ein allseits flüssigkeitsdichter Speicher erhalten läßt.

Demgemäß wurde ein Wärmespeicher zur Speicherung von Wärmeenergie gefunden, bei dem die Sohle mindestens eine thermische Dämmschicht umfassend, insbesondere benachbarte, geschäumte Körper, insbesondere Hartschaumblöcke, und mindestens eine, insbesondere oberhalb der Dämmschicht angebrachte, Abdichtschicht, insbesondere als eine im wesentlichen wasserdichte, flexible Kunststoffdichtungsfolie, umfaßt und wobei die Seitenwände mindestens eine thermische Dämmschicht umfassend, insbesondere benachbarte, geschäumte Körper, insbesondere Hartschaumblöcke und mindestens eine, insbesondere innenliegende, Abdichtschicht umfaßt und wobei die Abdeckung des Speicherbeckens mindestens eine Trägerschicht, mindestens eine oberhalb der Trägerschicht vorliegende thermische Dämmschicht umfassend, insbesondere benachbarte, geschäumte Körper, insbesondere Hartschaumblöcke, und mindestens eine oberhalb der Dämmschicht vorliegende Abdichtschicht umfaßt.

Vorteilhafterweise verfügt der Wärmespeicher dabei über eine allseitig im wesentlichen umlaufende thermische Dämmschicht und/oder eine im wesentlichen allseitig umlaufende Abdichtschicht.

Gemäß einer bevorzugten Ausführungsform der Erfindung ist vorgesehen, daß die thermische Dämmschicht, insbesondere großformatige und/oder geschlossenporige, Hartschaumstoffblöcke, enthaltend expandiertes Polystyrol, umfaßt.

Expandiertes Polystyrol als ein geeigneter Hartschaumstoff ist beispielsweise unter der Bezeichnung Styropor® im Handel erhältlich. EPS-Hartschaumblöcke werden im allgemeinen aus Polystyrolgranulat hergestellt. Hartschaumblöcke werden in vielfältigen Varianten und Formen kommerziell angeboten. Abmessungen von Quadern mit den Maßen 1,0 m x 0,5 m x 4,0 m haben sich dabei als durchaus praktikabel erwiesen. Besonders bevorzugt wird auf geschlossenporiges Schaumstoffmaterial zurückgegriffen.

Die erfindungsgemäßen Wärmespeicher sind vorzugsweise vollständig im Boden eingelassen. Die Sohle sowie die geneigten Seitenwände werden üblicherweise verfestigt und mit einer Sandschicht versehen, bevor eine Dämmschicht aus z.B. Hartschaumblöcken aufgesetzt wird.

Die Oberseite der auf Sohle und Seitenwand aufliegenden Dämmschicht wird mit einer im wesentlichen wasserdichten Abdichtschicht versehen. Hierfür können beispielsweise Kunststoffbahnen, wie sie aus dem Tunnelbau bekannt sind, eingesetzt werden. Bevorzugt wird auf thermoplastische, flexible Kunststoffolien, besonders bevorzugt auf Polyethylenfolien aus z.B. LD-PE, LLD-PE oder HD-PE zurückgegriffen. Als besonders vorteilhaft hat sich der Einsatz einer biaxialen LD-PE-Folie erwiesen. Zur Erlangung einer verbesserten Dimensionsstabilität wird häufig auch auf solche flexiblen Polyolefinfolien, insbesondere mit teilkristalliner Struktur, zurückgegriffen, die gegebenenfalls auch über eine Glasvliesarmierung verfügen. Diese Armierung kann z.B. die innenliegende Schicht einer coextrudierten Folie sein. Geeignete Abdichtbahnen sind z.B. über die Sarnafil GmbH, Feldkirchen, unter den Bezeichnungen MP 970, MP G 950 und MC G 770 zu beziehen. Grundsätzlich kann auch für die Abdichtschicht auf Lkw-Folien zurückgegriffen werden.

Eine weitere Ausgestaltung der Erfindung zeichnet sich dadurch hinaus, daß die Trägerschicht ein, insbesondere zugfestes, Gewebe oder Geotextil umfaßt.

Zur Abdeckung des Speicherbeckens wird bevorzugt auf verstärkte, insbesondere durch Draht verstärkte Gewebe, Drahtgeflechte, Geotextilien, Geomembranen und Geogitter zurückgegriffen. Diese sind im allgemeinen hinreichend zugfest, um über das Speicherbecken eingezogen werden und um die aufliegenden Hartschaumblöcke auch dann wenigstens zeitweise tragen zu können, wenn kein Kontakt mit dem Speichermedium besteht. Geotextilien, Geomembranen oder Geogitter sind dem Fachmann bekannt und sind darüber hinaus auch im Handel erhältlich. Bei Geotextilien handelt es sich regelmäßig um gewebtes Material auf der Grundlage synthetischer oder natürlicher Fasern. Als Geomembranen sind Kunststoffolien und als Geogitter netzartige oder gitterartige Strukturen, üblicherweise auf Kunststoffbasis, bekannt.

Die Trägerschicht überdeckt die Oberfläche des Wärmespeichers vollständig und reicht regelmäßig allseitig soweit auf die das Speicherbecken umgebende Geländeoberfläche, das nach Aufschüttung vom Boden als Ballastschicht die Trägerschicht mit ausreichender Sicherheit verankert ist.

Bevorzugte erfindungsgemäße Wärmespeicher verfügen ferner über eine zwischen Trägerschicht und Dämmschicht vorliegende Vlies- und/oder Gewebeschicht, insbesondere enthaltend eine Vielzahl an Schlaufen auf der der Dämmschicht zugewandten Seite zur Befestigung der Dämmschicht, insbesondere der Hartschaumblöcke. Durch Verwendung einer zusätzlichen Vlies- oder Gewebeschicht kann die Verlegung der Dämmschicht wesentlich vereinfacht werden. Beispielsweise wird die Dämmschicht bzw. werden die die Dämmschicht bildenden Hartschaumblöcke auf der Vlies- oder Gewebeschicht verlegt und befestigt und sodann z.B. zusammen mit der Trägerschicht über die Oberfläche des Wärmespeichers gezogen. Alternativ kann dieser Verbund aus Dämmschicht und Vlies- oder Gewebeschicht auch über die bereits verlegte Trägerschicht gezogen werden. Dabei hat sich als zweckmäßig herausgestellt, auf der Oberfläche der Vlies- oder Gewebeschicht Schlaufen vorzusehen, mit deren Hilfe die Dämmschicht, insbesondere die Hartschaumblöcke, befestigbar sind.

In einer weiteren Ausführungsform verfügt der erfindungsgemäße Wärmespeicher über eine zwischen der Trägersicht und der Dämmschicht, insbesondere zwischen der Trägerschicht und der Vlies- und/oder Gewebeschicht, vorliegende Abdichtschicht, insbesondere eine im wesentlichen wasserdichte, flexible Kunststoffolie. Diese zusätzliche Abdichtschicht stellt einen Schutz der Dämmschicht, insbesondere der Hartschaumblöcke gegen das Speichermedium, beispielsweise Wasser, dar. Demgegenüber dient die oberhalb der Dämmschicht verlegte Abdichtschicht zum Schutz der Speicherabdeckung gegen Beschädigung, Licht, insbesondere UV-Strahlung, und/oder Windsog. Auch kann auf diese obere Abdichtschicht weiteres Erdmaterial aufgetragen werden. Zum weiteren Schutz auch dieser Abdichtschicht gegen Beschädigung aus der Bodenanschüttung kann insbesondere an den Böschungsflächen eine zusätzliche geotextile Schutz- oder Gewebeschicht ober- und/oder unterhalb der Abdichtschicht vorgesehen sein.

Erfindungsgemäß kann ferner vorgesehen sein, daß die Neigung der Seitenwände zumindest bereichsweise Werte unterhalb von 50° annimmt. Grundsätzlich können die Seitenwände des Speicherbeckens auch im wesentlichen senkrecht ausgeführt sein, allerdings hat es sich in den meisten Fällen als vorteilhaft erwiesen, geneigte Seitenwände vorzusehen, da diese mit weitaus geringerem Aufwand herzustellen sind und auch geringerer Sicherheitsvorkehrungen beim Bau bedürfen. Der Neigungswinkel der Seitenwände kann in weiten Bereichen variiert werden, allerdings hat es sich als zweckmäßig erwiesen, Neigungswinkel unterhalb von 50° zu verwenden, um Verfestigungsarbeiten sowie das Verlegen der Hartschaumblöcke möglichst einfach gestalten zu können.

Erfindungsgemäß ist vorgesehen, daß die auf der Sohle angebrachte Dämmschicht eine Rohdichte im Bereich von 25 bis 35 kg/m³ und/oder die in der Seitenwandung angebrachte Dämmschicht eine Rohdichte im Bereich von etwa 10 bis 20 kg/m³ aufweist bzw. aufweisen.

Nach einer weiteren vorteilhaften Ausgestaltung der Erfindung ist vorgesehen, daß die Abdichtschicht der Seitenwände in etwa auf der Höhe der maximalen Speicherfüllung, insbesondere in einer das Speicherbecken umgebenden, im wesentlichen horizontalen Fläche, verankerbar ist. Die obere Abdichtschicht wie auch die zwischen Trägerschicht und Dämmschicht vorliegende Abdichtschicht wird regelmäßig allseitig über den Rand des Speicherbeckens hinaus verlegt, um zu einer besonders wirksamen Verankerung der Abdeckung beizutragen.

Gemäß einem weiteren Aspekt verfügt der erfindungsgemäße Wärmespeicher über mindestens eine, insbesondere wärmeisolierte, Trennwand, die das Speicherbecken in isolierte Bereiche aufteilt, zwischen denen im wesentlichen kein Austausch des Speichermediums stattfindet. Die Trennwände sind in geeigneter Weise doppelwandig ausgeführt, um eine bessere Wärmeisolierung sicherzustellen. Die im wesentlichen vertikalen Trennwände lassen sich beispielsweise an im Speicherbecken vorgesehene Fachwerkkonstruktionen aus z.B. Stahlrohren befestigen. Durch die Unterteilung in Zonen kann der Wärmespeicher schnell auf eine nutzbare hohe Temperaturstufe geladen werden. Die Trennwände können z.B. aus in Kunststoffbahnen eingeschweißten Dämm- und/oder Schaumstoffen gefertigt sein, da sie selber regelmäßig keine Stützfunktion zu übernehmen brauchen. In einer bevorzugten Ausgestaltung wird durch mindestens eine umlaufende Endlos-Trennwand das Speichermedium in einen inneren und einen äußeren Bereich getrennt. Durch die Unterteilung in derartige aufeinanderfolgende Zonen z.B. bei Verwendung von zwei oder mehreren umlaufenden Trennwänden, kann ein geringerer Temperaturgradient zwischen der Kernzone und dem das Speicherbecken umgebenden Erdreich erzielt werden, wodurch sich die Wärmeverluste verringern lassen.

Gemäß einem weiteren Aspekt der Erfindung umfaßt der Wärmespeicher ebenfalls mindestens eine Erdsonde benachbart zum Speicherbecken, insbesondere mindestens eine Reihe an beabstandeten Erdsonden.

Dabei kann erfindungsgemäß vorgesehen sein, daß beabstandete Erdsonden um den gesamten Umfang des Speicherbeckens vorliegen. Die das Speicherbecken des erfindungsgemäßen Wärmespeichers umgebenden Erdsonden können beispielsweise dazu genutzt werden, ein Speichermedium aufzunehmen, das über eine Temperatur verfügt, die zu niedrig ist, um in das Speicherbecken eingespeist zu werden, jedoch ausreicht, um das das Speicherbecken umgebende Erdreich zu erwärmen. Auf diese Weise sinkt der Temperaturgradient zwischen dem Speichermedium im Speicherbecken und dem umgebenden Boden, wodurch sich wiederum Wärmeverluste verringern lassen. Andererseits kann die im Boden im Bereich der Erdsonden gespeicherte Niedrigtemperaturwärme zu Zeiten günstiger Stromtarife wieder entnommen und einer Wärmepumpe zugeführt werden, welche dann Wärme mit hohem Temperaturniveau in den Wasserspeicher einspeist. Geeignete Erdsonden werden üblicherweise über im wesentlichen vertikale Bohrungen erhalten, wobei in der Regel zwei benachbarte Bohrungen an ihrem unteren Ende unter Ausbildung eines U-Profils miteinander verbunden werden. Die erhaltenen Bohrlöcher sind regelmäßig mit einem gut wärmeleitenden Material hoher Wärmespeicherkapazität, wie z.B. Kies oder Quarzsand, gegebenenfalls vermischt mit Zement, ummantelt.

Die Erdsonden können zwecks Wärmeverteilung nicht nur mit dem Speicherbecken eines Wärmespeichers gekoppelt werden, sondern überraschenderweise hat sich gezeigt, daß sich diese auch bereits beim Bau des Speicherbeckens dazu eignen, den umgebenden Bodenkörper zu vereisen. Dazu können beispielsweise verflüssigte Gase oder Kältesole in die Erdsonden eingebracht werden. Auf diese Weise lassen sich z.B. auch senkrechte Seitenwände problemlos herstellen, ohne daß man beispielsweise temporär Spundwände einziehen müßte.

Gemäß einem weiteren Aspekt der Erfindung verfügt der Wärmespeicher über mindestens ein Rohr zur Aufnahme und Durchleitung von wärmeaufnehmenden und/oder wärmespeichernden Fluiden, das zumindest bereichsweise beabstandet zu der Seitenwand des Speicherbekkens, insbesondere das Speicherbecken teilweise oder vollständig umgebend, vorliegt. Die Rohre, insbesondere druckfesten Kunststoffrohre, stehen vorzugsweise ebenfalls, ähnlich wie die Erdsonden, mit dem Speichermedium im Speicherbecken in Wechselwirkung. Beispielsweise können diese Rohre an die Geländeoberfläche geführt werden und in ein zum Wärmespeicher gehörendes Betriebsgebäude einmünden. Ein Speichermedium, das z.B. wegen seiner zu geringen Temperatur nicht direkt in das Speicherbecken eingeleitet werden kann, kann seine Wärmeenergie über die um das Speicherbecken verlegten Rohre an das umgebende Erdreich abgeben. Damit kann auch über derartige Rohre zusätzlich oder alternativ zu Erdsonden der Temperaturgradient zwischen dem Speicherbecken und dem umgebenden Boden abgesenkt werden. Dabei können die Erdsonden sowohl im Bereich um das Speicherbecken angeordnet sein, in dem auch die Rohre verlegt sind, als auch in einem Bereich, der von den Rohren beabstandet ist, entweder in Richtung auf das Speicherbecken oder in dazu entgegengesetzter Richtung. Vorzugsweise sind die Rohre in einem ersten Areal benachbarte zur Seitenwand des Speicherbeckens verlegt, woran sich in einem zweiten, entfernteren Areal, vorzugsweise das Speicherbecken ebenfalls vollständig oder teilweise umgebend, die Erdsonden anschließen.

Demgemäß zeichnet sich ein erfindungsgemäßer Wärmespeicher in einer Ausführungsform dadurch aus, daß das Rohr im wesentlichen in dem Bereich zwischen der Seitenwand und der Erdsonde vorliegt.

Erfindungsgemäß kann ferner vorgesehen sein, daß mindestens eine Seitenwand zumindest bereichsweise im wesentlichen senkrecht ist. Will man auf senkrechte Seitenwände für das Speicherbecken zurückgreifen, bietet sich z.B. die Verwendung von temporären Spundwänden als Sicherungsmaßnahme an. Solche Maßnahmen können regelmäßig bei geneigten Seitenwänden entfallen. Zusätzlich sowie insbesondere alternativ kann, wie vorgehend bereits angesprochen, das das Speicherbecken umgebende Erdreich z.B. mit Hilfe von Bohrlöchern, insbesondere von Erdsonden, vereist werden.

Um dem Druck des aufgefüllten Erdreichs standzuhalten, wird bislang regelmäßig auf Betonwände zurückgegriffen. Alternativ hierzu wird jetzt erfindungsgemäß ein Wärmespeicher vorgeschlagen, bei dem mindestens eine sich vom Speicherbecken nach außen erstreckende, insbesondere im wesentlichen horizontale, Geotextillage, Geogitterlage und/oder ein zugfestes Gewebe, die bzw. das mit der Seitenwand zumindest abschnittsweise, insbesondere im wesentlichen entlang des gesamten Umfangs des Speicherbeckens, verbunden ist.

Hierbei zeichnet sich eine bevorzugte Ausgestaltung dadurch aus, daß die Geotextillage, das Geogitter oder das zugfeste Gewebe, insbesondere von unten, um einen Hartschaumblock herumgeführt ist, so daß zumindest die Unter-, Ober- und die dem Speicherbecken zugewandte Innenseite des Hartschaumblocks mittelbar oder unmittelbar mit der Geotextillage, dem Geogitter oder dem zugfesten Gewebe zumindest bereichsweise umgeben ist bzw. sind, insbesondere in Kontakt steht, und daß nach dem Herumführen um den Hartschaumblock ein überstehender Abschnitt der Geotextillage, des Geogitters oder des zugfesten Gewebes verbleibt.

Vorteilhafterweise liegt dabei der überstehende Abschnitt der Geotextillage, der Geogitterlage oder des zugfesten Gewebes im wesentlichen horizontal oder nach unten geneigt im Boden um das Speicherbecken vor. Eine Geotextillage, eine Geogitterlage oder ein zugfestes Gewebe wird dabei zumindest abschnittsweise in etwa auf der Höhe der Unterkante eines Hartschaumblocks in etwa horizontal auf einer Lage, die das Speicherbecken umgibt, verlegt. Beträgt die Höhe der Seitenwand etwa 10 Meter, hat es sich als zweckmäßig erwiesen, z.B. die Geotextillage, das Geogitter oder das zugfeste Gewebe, gemessen von der Außenseite des Hartschaumblocks, im wesentlichen horizontal etwa 5 bis 8 Meter in das Erdreich hinein zu verlegen. Die Geotextillage, das Geogitter oder das zugfeste Gewebe wird entlang der Unterseite des Hartschaumblocks geführt, um diesen herumgeschlagen, wobei ein Abschnitt bestimmter Länge verbleibt, der auf der Oberseite des Hartschaumblocks zur Anlage gelangt und über eine Länge verfügt, die ausreicht, um in das umgebende Erdreich eingezogen zu werden. Dies geschieht geeigneterweise dadurch, daß man den vorher ausgehobenen Boden auf die untere Geotextillage bzw. das zugfeste Gewebe auffüllt und den umgeschlagenen Abschnitt der Geotextillage ebenfalls in dem hinterfüllten Material verankert. Vorzugsweise wird dieser Abschnitt dabei nach schräg unten geführt. Auf diese Weise erhält eine erste, vorzugsweise unterste, Lage eine Geotextilbewehrung bzw. eine Bewehrung durch ein zugfestes Gewebe. In gleicher Weise kann im folgenden mit dem zweiten Hartschaumblock, der auf dem untersten Hartschaumblock gesetzt wird, verfahren werden. Demnach wird auf das aufgefüllte Erdreich z.B. eine Geotextillage im wesentlichen horizontal aufgelegt, um den zweiten Hartschaumblock herumgeschlagen, woraufhin durch Hinterfüllen mit Erdreich wiederum der überstehende Abschnitt verankert wird. Auf diese Weise kann bis zum obersten Hartschaumblock unter Ausbildung aufeinanderfolgender Lagen an geotextiler Bewehrung fortgefahren werden.

Selbstverständlich kann auch in diesen Lagen mindestens ein Rohr zur Aufnahme und Durchleitung von wärmeaufnehmendem und/oder wärmespeicherndem Fluid verlegt sein.

Gemäß einer weiteren vorteilhaften Ausgestaltung der Erfindung ist vorgesehen, daß zumindest derjenige Abschnitt der Geotextillage, der Geogitterlage oder des zugfesten Gewebes, der entlang der Innenseite des Hartschaumblocks vorliegt, wenigstens bereichsweise auf der dem Speicherbecken zugewandten Seite eine klettverschließbare Oberfläche aufweist. Insbesondere wenn im wesentlichen senkrechte Seitenwände vorgesehen sind, hat es sich als besonders vorteilhaft erwiesen, die Abdichtschicht mit Hilfe von Klettverschlüssen an der Innenseite der Seitenwand zu befestigen.

Dazu hat zweckmäßigerweise auch die Innenseite der an der Seitenwand vorliegenden Abdichtschicht zumindest bereichsweise eine klettverschließbare Oberfläche aufzuweisen. Klettverschlüsse reichen im vorliegenden Fall aus, um das Eigengewicht der Abdichtschicht, bei der es sich vorteilhafterweise um eine flexible thermoplastische Kunststoffolie handelt, zu halten. Dabei kann es ebenfalls von Vorteil sein, entsprechende Klettverschlüsse auch bei geneigten Seitenwänden vorzusehen, um ein Abrutschen der Abdichtschicht zu vermeiden, solange das Speicherbecken noch nicht mit Speichermedium aufgefüllt ist. Selbstverständlich können alternativ oder zusätzlich zu Klettverschlüssen auch weitere, dem Fachmann bekannte Verbindungsmittel eingesetzt werden. Beispielsweise läßt sich die Abdichtschicht auch mittels Schlaufen und Ösen, mittels Druckknöpfen, mittels Reißverschlüssen, mittels Knöpfen oder dergleichen mit der Seitenwand verbinden.

Gemäß einer weiteren erfindungsgemäßen Ausführungsform ist vorgesehen, daß die Geotextillage, die Geogitterlage oder das zugfeste Gewebe zumindest bereichsweise, insbesondere auf ihrer Unterseite, eine Vliesschicht umfaßt. Die Verwendung einer Vliesschicht hat den Vorteil, daß sie unmittelbar eine klettverschließbare Oberfläche zur Verfügung stellt, so daß es nicht mehr nötig ist, eine entsprechende Klettverschlußunterlage zusätzlich auf der Innenseite der Seitenwand vorzusehen.

Dabei hat es sich als vorteilhaft erwiesen, wenn mindestens eine Vliesschicht im Verbund mit einer Geotextillage, einer Geogitterlage oder einem zugfesten Gewebe vorliegt.

Gemäß einer weiteren Ausgestaltung der Erfindung ist oberhalb der Abdeckung zumindest bereichsweise Erdreich und/oder ein Teich angeordnet.

Dabei kann vorgesehen sein, daß die Böschung des Teiches, insbesondere im wesentlichen in gleicher Weise wie die Seitenwände, geneigt ist.

Eine der Erfindung zugrundeliegende Aufgabe wird weiterhin gelöst durch ein Verfahren zur Herstellung eines Wärmespeichers, insbesondere eines erfindungsgemäßen Wärmespeichers, das gekennzeichnet ist durch die folgenden Verfahrensschritte:
a) Aufbringen einer thermischen Dämmschicht, insbesondere in Form benachbarter Hartschaumblöcke, auf die Sohle eines Speicherbeckens,
b) Aufbringen einer thermischen Dämmschicht, insbesondere in Form benachbarter Hartschaumblöcke, auf die geneigte Seitenwand des Speicherbeckens,
c) Auflegen einer einheitlichen, flexiblen, insbesondere im wesentlichen wasserundurchlässigen, Abdichtschicht auf die Dämmschicht von Sohle und Seitenwände oder Auflegen einer einheitlichen, flexiblen, insbesondere im wesentlichen wasserundurchlässigen, Abdichtschicht auf die Dämmschicht der Sohle und Auflegen einer einheitlichen, flexiblen, insbesondere im wesentlichen wasserundurchlässigen, Abdichtschicht auf die Dämmschicht der Seitenwand und Verschweißen von Sohlen- und Seitenwandabdichtschicht;
d) Fortführung der Abdichtschicht der Seitenwand, im wesentlichen in horizontaler Ausrichtung, über die obere Seitenwandbegrenzung hinaus zur Verankerung, insbesondere im angrenzenden Erdreich;
e) gegebenenfalls Auffüllen des Speicherbeckens mit dem Speichermedium, insbesondere mit Wasser, im wesentlichen bis zur maximalen Befüllung;
f) Anbringen einer Trägerschicht, insbesondere eines Trägergewebes, auf dem Speicherbekken als Abdeckung desselben;
g) Anbringen einer Dämmschicht auf dem Trägergewebe, insbesondere in Form benachbarter Hartschaumblöcke;
h) Anbringen einer Abdichtschicht auf der Dämmschicht;
i) Verankern der Abdichtschicht der Seitenwand, der Trägerschicht und/oder der Abdichtschicht der Abdeckung in dem das Speicherbecken umgebenden Areal.

Dabei kann vorgesehen sein, daß man eine Vlies- und/oder Gewebeschicht und/oder Abdichtschicht zwischen der Trägerschicht und der Dämmschicht anbringt. Die Reihenfolge der Schritte a) und b) kann selbstverständlich auch umgekehrt werden. Das Auffüllen des Speicherbeckens mit Speichermedium kann auch erst nach Anbringung der Trägerschicht bzw. der Abdeckung erfolgen.

In einer weiteren Ausführungsform kann dabei vorgesehen werden, daß man die Seitenwände geneigt oder wenigstens abschnittsweise im wesentlichen senkrecht ausführt.

Insbesondere für solche Speicherbecken, die zumindest abschnittsweise über eine im wesentlichen senkrechte Seitenwand verfügen, ist daher erfindungsgemäß ein Verfahren vorgesehen, bei dem man mindestens eine Geotextillage, ein Geogitter oder ein zugfestes Gewebe, insbesondere in im wesentlichen horizontaler Ausrichtung, benachbart zur Seitenwand und in Verbindung mit dieser bzw. diesem im Erdreich anbringt, insbesondere indem man die Geotextillage, das Geogitter oder das zugfeste Gewebe, insbesondere von unten, um einen Hartschaumblock herumführt, so daß zumindest die Unter-, Ober- und die dem Speicherbecken zugewandte Innenseite des Hartschaumblocks mittelbar oder unmittelbar mit der Geotextillage, dem Geogitter oder dem zugfesten Gewebe zumindest bereichsweise umgeben ist bzw. sind, insbesondere in Kontakt steht, und daß der nach dem Herumführen um den Hartschaumblock verbleibende überstehende Abschnitt der Geotextillage oder des zugfesten Gewebes in Richtung des umgebenden Erdreichs, vorzugsweise horizontal oder nach unten geneigt, zurückgeführt, insbesondere verankert, wird.

Der vorliegenden Erfindung liegt die überraschende Erkenntnis zugrunde, daß man auf kostengünstige und im Vergleich zu bekannten Herstellungsverfahren nicht sehr aufwendige Art und Weise zu Wärmespeichern gelangen kann, die über einen sehr hohen Wirkungsgrad verfügen. Es lassen sich innerhalb kurzer Zeit Speichermediumtemperaturen im Bereich von 60° bis 80° erhalten, die über sehr lange Zeiträume in dem Speicherbecken des erfindungsgemäßen Wärmespeichers konserviert werden können, ohne daß es zu merklichen Energieverlusten kommt. Insbesondere sind auch ohne weiteres sehr große Speicherbecken zugänglich, so daß ein breites Anwendungsspektrum zur Speicherung von Wärmeenergie genutzt werden kann. Beispielsweise kann die Abwärme aus industriellen Prozessen, z.B. der Grundstoffindustrie oder von Kraftwerken genutzt werden, um benachbarte Wohngebiete zu beheizen. Von dieser Möglichkeit wird bislang nicht oder nur kaum Gebrauch gemacht, da bei Produktionsstillstand oder Werksurlaub die Versorgung der angeschlossenen Gebäude nicht mehr gewährleistet werden kann. Die Substitution der bisher im Haushalt verbrauchten Energie durch bereits erzeugte industrielle Abwärme bringt zudem eine erhebliche Reduktion des CO₂-Ausstosses mit sich. Mit Hilfe der erfindungsgemäßen Wärmespeicher können ohne weiteres Speichervolumen eingesetzt werden, die für eine mindestens vierwöchige Überbrückung eines Produktionsstillstandes auslegbar sind. Durch Verwendung einer nicht starren Abdeckung, insbesondere auch bei Mitverwendung eines sich oberhalb der Abdeckung befindlichen Teiches bereitet auch die temperaturbedingte Ausdehnung des Speichermediums keine weiteren Probleme. Schließlich ist es nicht mehr notwendig, für die Ausgestaltung senkrechter Seitenwände von Speicherbecken auf Beton- bzw. Stahlbetonwände Rückgriff nehmen zu müssen. Aufgrund der gegenüber herkömmlichen Wärmespeichern geringeren Herstellkosten kann ein Teil der Einsparung auch für eine nochmals verbesserte Wärmedämmung eingesetzt werden, womit sich die Wärmeverluste gegenüber bekannten Wärmespeichern nochmals deutlich reduzieren.

Weitere bevorzugte Ausführungsformen der Erfindung werden anhand der nachfolgenden Beschreibung unter Heranziehung von Zeichnungen in nicht abschließender Weise beschrieben, in denen
- Fig. 1: eine schematische Querschnittsansicht eines erfindungsgemäßen Wärmespeichers zeigt;
- Fig. 2: eine schematische Querschnittsansicht einer alternativen Ausführungsform eines erfindungsgemäßen Wärmespeichers zeigt;
- Fig. 3: eine schematische Querschnittsansicht einer alternativen Ausführungsform eines erfindungsgemäßen Wärmespeichers zeigt;
- Fig. 4: eine schematische Querschnittsansicht einer weiteren alternativen Ausführungsform eines erfindungsgemäßen Wärmespeichers zeigt;
- Fig. 5: eine schematische Querschnittsansicht einer weiteren alternativen Ausführungsform eines erfindungsgemäßen Wärmespeichers zeigt; und
- Fig. 6.: eine schematische Querschnittsansicht einer weiteren alternativen Ausführungsform eines erfindungsgemäßen Wärmespeichers zeigt.

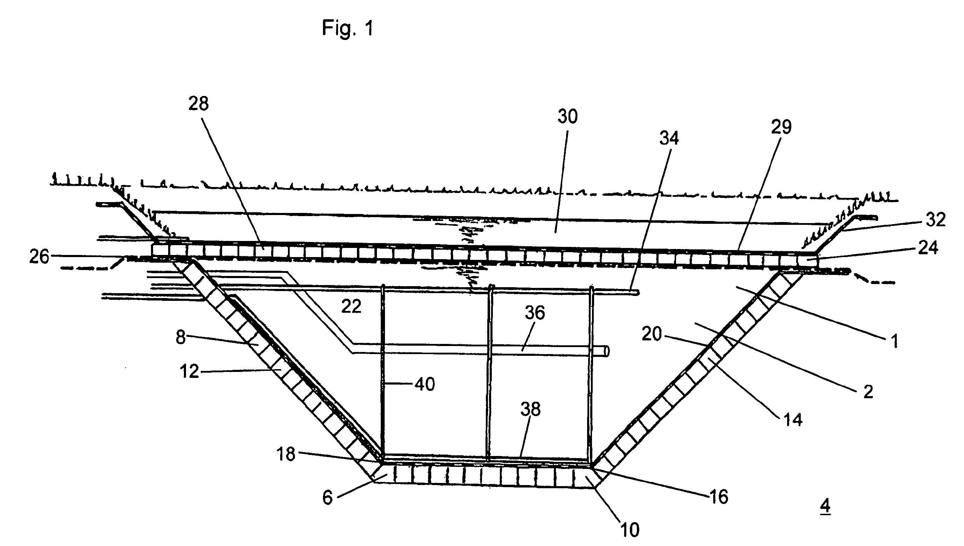

Fig. 1 ist eine erfindungsgemäßer Wärmespeicher 1 in schematischer Querschnittsansicht zu entnehmen. Der Wärmespeicher, insbesondere das Speicherbecken 2, ist vollständig in das Erdreich 4 eingelassen. Dazu wird eine beckenartige Baugrube mit Böschungen von 1:1 bis 1:1,5, je nach Reibungswinkel des anstehenden Bodens 4, hergestellt. Das Speicherbecken 2 umfaßt eine Sohle 6 sowie eine umlaufende Seitenwand 8, beispielsweise in Form einer Kegelstumpfwandung. Auf den eingeebneten und verdichteten Flächen der Sohle 6 und der Seitenwandung bzw. Böschung 8 werden Dämmschichten 10 und 12 in Form großformatiger Blöcke aus extrudiertem Polystyrol-Hartschaum aufgebracht. Bevorzugt werden geschlossenporige Hartschaumblöcke 14 eingesetzt, beispielsweise EPS-Blöcke von BASF, Ludwigshafen. Während die für die Sohle 6 verwendeten Hartschaumblöcke üblicherweise über eine Rohdichte von 30 kg/m³ verfügen, weisen die für die Seitenflächen 8 verwendeten Hartschaumblöcke eine Dichte von etwa 15 kg/m³. Die großformatigen Hartschaumblöcke 14 werden auf der Sohle 6 und der Seitenwand 8 vorzugsweise vollflächig verlegt. Auf den Hartschaumblöcken 14 wird als untere Dichtung eine Abdichtschicht in Form einer ein- oder mehrlagigen Kunststoffdichtungsbahn 16 aufgebracht. Hierbei kann entweder auf eine einheitliche Kunststoffdichtungsbahn, die die gesamte Fläche des Speicherbeckens abdeckt, oder auf mehrere einzelne Kunststoffdichtungsbahnen, die nach Aufbringung auf die Hartschaumoberfläche miteinander verschweißt werden, zurückgegriffen werden. Häufig wird eine Kunststoffdichtungsbahn 18 für die Sohle 6 und mindestens eine weitere, separate Kunststoffdichtungsbahn 20 für die Seitenwand 8 eingesetzt. Falls erforderlich, kann insbesondere die auf die geneigte Seitenwand 12 aufgelegte Dichtungsbahn 20 durch geeignete Verbindungsmittel, z.B. Klettverschlüsse, gegen ein Abrutschen gesichert werden, solange noch kein Speichermedium 22 eingefüllt ist. Die Kunststoffdichtungsbahn 20 der Seitenwand 8 reicht vorzugsweise allseitig über den Rand des Speicherbeckens 2 hinaus, um, beispielsweise durch aufgelegtes Erdreich, verankert werden zu können. Das Speicherbecken 2 verfügt weiterhin über eine Abdeckung 24, die eine Trägerschicht 26, eine Dämmschicht 28 in Form benachbarter, vollflächig verlegter Hartschaumblöcke 14 sowie über eine Abdichtschicht 29 umfassend eine ein- oder mehrlagige Kunststoffdichtungsbahn, verfügt. Als Trägerschicht 26 kommt beispielsweise ein Geotextil in Frage. Ein geeignetes Geotextil ist unter anderem unter der Bezeichnung Tensar im Handel erhältlich. Zum Schutz der Dämmschicht 28 gegen Wasser kann zwischen der Trägerschicht 26 und der aus den Hartschaumblöcken 14 gebildeten Schicht eine weitere Abdichtschicht (nicht abgebildet), z.B. eine Lkw-Plane, eingezogen werden. Ferner hat es sich als vorteilhaft erwiesen, die Hartschaumblöcke 14 auf eine Vlies- oder Gewebeschicht anzubringen und an dieser, vorzugsweise mit Hilfe von Schlaufen zu befestigen (nicht abgebildet). Eine derartig präparierte Vlies- oder Gewebeschicht kann sodann über die Trägerschicht 26 oder die zusätzliche Abdichtschicht gezogen werden. Auf diese Weise kann die Abdeckung 24 hergestellt werden bei bereits befülltem, z.B. mit Wasser befülltem Speicherbecken, ohne daß es erforderlich ist, die Trägerschicht 26 begehen zu müssen. Zur besseren Verankerung der Trägerschicht 26 ist diese vorzugsweise allseits über den Rand des Speicherbeckens 2 hinausgeführt und kann beispielsweise durch aufgetragenes Erdreich arretiert werden. Das Gleiche gilt selbstverständlich auch für die zwischengezogene Vlies- oder Gewebeschicht und die zusätzliche Abdichtschicht. Zur Vermeidung von z.B. Windsog oder von mechanischer Beschädigung der Abdeckung 24 hat es sich als vorteilhaft herausgestellt, wenn man auf diese einen Teich 30 anbringt. Der allseitig umlaufende und über den Rand des Speicherbeckens 2 hinausgehende Rand 32 der Abdichtschicht 29 wird für diesen Fall vorzugsweise zumindest bereichsweise parallel zur Böschung des Teiches 30 verlegt, um gleichzeitig eine sichere Abdichtung des Teiches zu gewährleisten. Zur Vermeidung von Beschädigungen dieser Abdichtschicht hat es sich als vorteilhaft erwiesen, den in der Böschung verlegten Abschnitt 32 auf der Ober- und/oder auf der Unterseite mit einem Geotextil abzudekken (nicht abgebildet). Im abgedichteten Speicherbecken 2 des Wärmespeichers 1 sind Rohrleitungen zum Einleiten und Entnehmen von heißem Wasser 34 im oberen Bereich des Speicherbeckens 2, von warmem Wasser 36 im mittleren Bereich des Speicherbeckens 2 sowie von kühlem Wasser 38 im unteren Bereich des Speicherbeckens 2 verlegt. Dabei hat es sich als vorteilhaft erwiesen, diese Leitungen an einer im Speicherbecken 2 installierten Fachwerkkonstruktion 40 aus Stahlrohren zu befestigen.

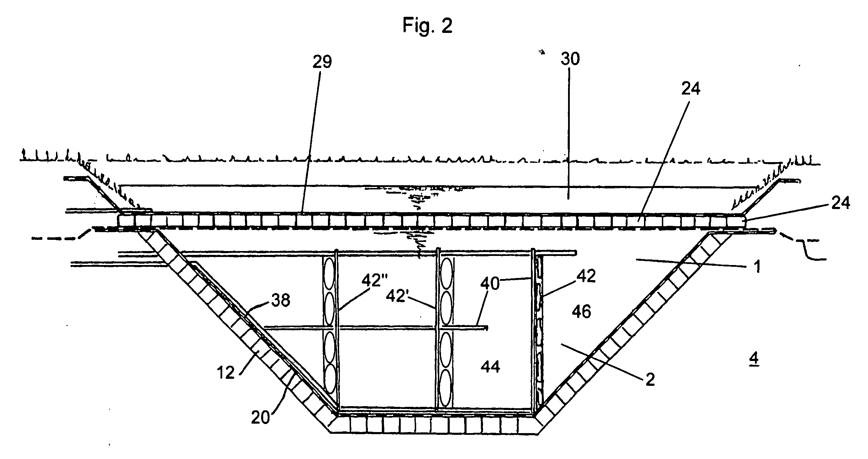

Die in Fig. 2 gezeigte Ausführungsform eines erfindungsgemäßen Wärmespeichers 1 entspricht im wesentlichen derjenigen der Fig. 1 mit dem Unterschied, daß zusätzlich doppelwandige, thermisch isolierende Trennwände 42 im Speicherbecken 2 eingezogen sind. Diese Trennwände erstrecken sich im wesentlichen vertikal von der Sohle 6 bis zur Abdeckung 24 des Speicherbeckens in der Weise, daß ein freier Flüssigkeitsaustausch von diesseits und jenseits befindlichem Speichermedium im wesentlichen ausgeschlossen wird. Die Trennwand 42 kann in einer Ausführungsform auch umlaufend ausgeführt sein und somit eine Kernzone 44 und eine Randzone 46 ausbilden. Die Trennwände 42 können ebenfalls an der Fachwerkkonstruktion 40 befestigt werden. Insoweit die Trennwände 42 nicht notwendigerweise selber eine tragende Funktion ausüben muß, hat es sich als ausreichend erwiesen, in Kunststoffolien verschweißtes Dämmaterial bzw. Schaumstoffmaterial für dieselbe zu verwenden. Durch die Unterteilung in nicht direkt miteinander in Verbindung stehende Speichermedienzonen kann der Wärmespeicher 1 schneller auf eine nutzbare, hohe Temperaturstufe geladen werden. Zudem reduziert der durch die Unterteilung in Zonen bedingte geringere Temperaturgradient zwischen der Kemzone 44 und dem umgebenden Erdreich 4 Wärmeverluste. Die flexiblen Trennwände aus doppellagigen Folien, in die kissenartige Dämmplatten aus Schaumstoff eingeschweißt sein können, können z.B. genutzt werden, um Speicherzellen mit Speichervolumina von 500 bis 1000 m³ zu erhalten. Solche kleineren Zellen können beispielsweise im Herbst oder Winter durch hochwertige Vakuumkollektoren in kurzer Zeit auf ein hohes Temperatumiveau nachgeladen werden. Auch kann eine in das Betriebssystem des erfindungsgemäßen Wärmespeichers 1 integrierte, mit z.B. Nachtstrom betriebene Wärmepumpe die in thermisch weitgehend entleerten Zellen noch vorhandene, aber für Heizzwecke nicht mehr nutzbare Restwärme entnehmen und mit höherem Temperaturniveau in eine andere teilentladene Zelle bzw. Zone einspeisen.

Trenn- bzw. Querwände können selbstverständlich auch anderweitig gefertigt sein, solange sie zur thermischen Isolierung geeignet sind. Beispielsweise eignen sich auch Quer- bzw. Trennwände aus mit Kies gefüllten geotextilen Polsterwänden oder doppelwandige, mit Luft gefüllte Wandsysteme.

Selbstverständlich können in das Speicherbecken 2 weitere Trennwände eingezogen werden, so daß mehrere Einzelzonen innerhalb des Speicherbeckens vorliegen. Jede Zone kann dann über mindestens eine Leitung befüllt bzw. entleert werden, wobei für eine Zone auch mehrere Ein- und Auslaßleitungen in unterschiedlicher Höhe im Speicherbecken 2 vorliegen können, wie z.B. zu Fig. 1 beschrieben.

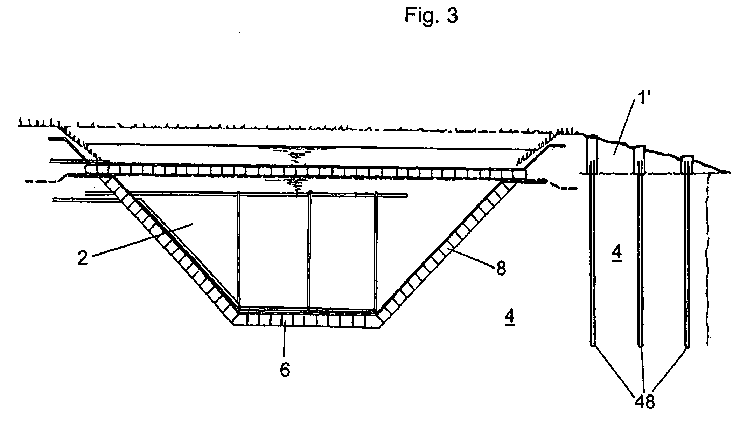

In Fig. 3 ist ein erfindungsgemäßer Wärmespeicher 1' abgebildet, der über ein Speicherbecken 2, wie in Fig. 1 oder 2 dargestellt, verfügt und der darüber hinaus beabstandet zu den Seitenwänden 8 Erdsonden 48 aufweist. Hierbei handelt es sich um zwei im wesentlichen parallele, vertikale Erdröhren, die an ihrem unteren Ende unter Ausbildung einer U-förmigen Erdsonde miteinander verbunden sind. Solche Erdsonden 48 können z.B. mit Quarzsand als gut wärmeleitendem und wärmespeicherndem Material gefüllt sein. Die Erdsonden sind beabstandet zum Speicherbecken 2 angeordnet und können mit dem Speicherbecken in Wirkverbindung stehen. So kann ein Speichermedium, dessen Temperatur nicht ausreicht, um dem Speicherbecken zugeführt zu werden, in die Erdsonden 48 eingebracht werden, wodurch das umgebende Erdreich 4 erwärmt und der Temperaturgradient zwischen dem Speichermedium im Speicherbecken 2 und dem umgebenden Erdreich reduziert wird. Die Erdsonden 48 können beabstandet voneinander abschnittsweise oder vollständig um den Umfang des Speicherbekkens 2 angeordnet sein.

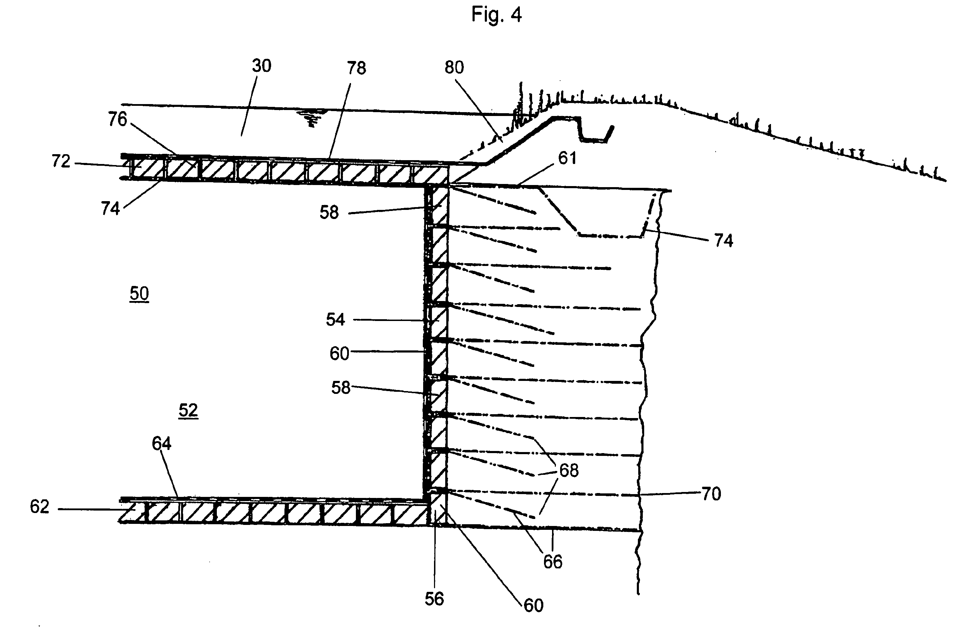

In Fig. 4 ist ein Ausschnitt einer alternativen Ausführungsform eines Wärmespeichers 50 in Querschnittsansicht dargestellt. Der Wärmespeicher 50 verfügt über ein Speicherbecken 52 mit einer senkrechten Seitenwand 54. Die Seitenwand 54 setzt sich zusammen aus einer Dämmschicht 56 umfassend mehrere aufeinander gestapelte Hartschaumblöcke 58 und einer Abdichtschicht 60 in Form einer ein- oder mehrlagigen Kunststoffdichtungsbahn. Die Kunststoffdichtungsbahn 60 ist mit der die Sohle 62 bedeckenden Kunststoffdichtungsbahn 64 verschweißt. Der Wärmespeicher 50 läßt sich auch ohne Verwendung von zusätzlichem Stützmauerwerk oder von temporären Spundwänden auf einfache und zuverlässige Weise herstellen. Ist beispielsweise ausreichend Raum für einen über den Rand des Speicherbeckens hinausgehenden Bodenaushub gegeben, kann auf der Höhe der Sohle 62 seitlich derselben auf einer insbesondere im wesentlichen horizontalen Lage eine Geotextilbahn 66 oder ein zugfestes Gewebe derart verlegt werden, daß sie um den untersten Hartschaumblock 60 entlang der Unterseite desselben herumgeführt und über die Oberseite zurückgeschlagen wird. Die Geotextillage 66 wird mit Erdreich aufgefüllt, wobei es sich als vorteilhaft erwiesen hat, wenn der Überstand 68 leicht nach unten geneigt in den Boden eingebettet wird. Auf der Höhe der Oberkante des untersten Hartschaumblocks 60 wird anschließend eine weitere Lage einer Geotextilbahn 70, insbesondere auf einen verfestigten Untergrund, aufgelegt und in gleicher Weise um einen Hartschaumblock 60 herumgeführt, wie bereits vorhergehend für die erste Lage beschrieben. Auf gleiche Weise wird geeigneterweise jeder nachfolgende Hartschaumblock über eine Geotextillage befestigt. Zur Hinterfüllung der Seitenwand kann der vorher ausgehobene Boden verwendet werden. Die senkrechte Seitenwand ist damit fest mit dem Hinterfüllboden verankert, so daß das Speicherbecken auch im ungefüllten Zustand dem seitlichen Erddruck standhält. Die Kunststoffdichtungsbahn 60 wird vorzugsweise über den obersten Hartschaumblock 58 der Seitenwand umgeschlagen und der überstehende Rand 61 ebenfalls in umgebenden Erdreich verankert. Zur besseren Handhabung der Kunststoffdichtungsbahn 60 werden regelmäßig auf der Innenseite Klettverschlüsse angebracht, die mit einer entsprechenden, auf der Geotextillage angebrachten Unterlage, die sich auf der Innenseite der Seitenwand befindet, haftend wechselwirken können. Sobald die senkrechte Seitenwand 54 errichtet ist, kann die Sohle 62 mit einer Dämmschicht aus Hartschaumblöcken vollflächig ausgelegt und auf diese Fläche eine Abdichtschicht in Form einer Kunststoffdichungsbahn 64 aufgelegt werden. Die Abdeckung 72 des Wärmespeichers 50 wird gebildet aus einer Trägerschicht 74, einer Dämmschicht 76 aus ebenfalls vollflächig verlegten Hartschaumblöcken und einer hierauf aufliegenden, im wesentlichen wasserfesten Abdichtschicht 78 in Form einer Kunststoffdichtungsbahn. Trägerschicht 74 wie Abdichtschicht 78 werden regelmäßig über den Seitenrand des Speicherbeckens hinaus zur Verankerung in das umgebende Erdreich geführt. Liegt oberhalb der Abdeckung 72 beispielsweise ein Teich 30 vor, wie in Fig. 4 gezeigt, wird die Kunststoffdichtungsbahn 78 zweckmäßigerweise entlang der Böschung 80 hochgeführt, zum einen zur Verankerung, zum anderen zur Abdichtung des Teiches. Ober- wie auch Unterseite des in die Böschung verlegten Kunststoffbahnabschnitts können zum Schutz gegen Beschädigung mit einer Geotextillage versehen sein (nicht abgebildet).

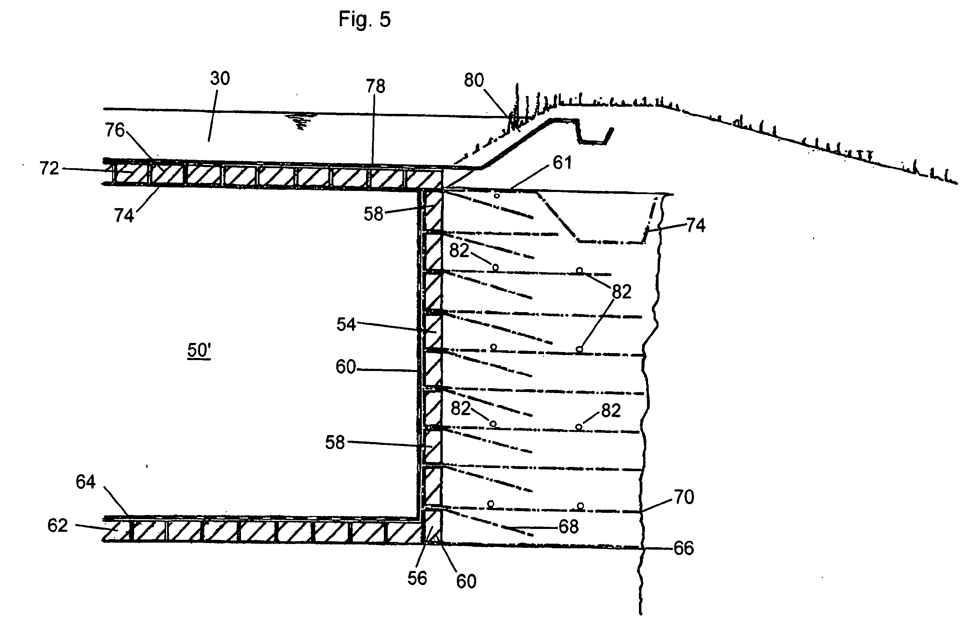

Wie Fig. 5 zu entnehmen ist, können in die einzelnen Lagen der geotextilen Bewehrung entlang der Seitenwand 54 druckfeste Rohre 82, insbesondere druckfeste Kunststoffrohre, verlegt werden, in denen beispielsweise weitere, im Speicher nicht mehr verwertbare Wärme zirkulieren kann. Die Rohre 82 können abschnittsweise oder vollständig entlang der bzw. benachbart zur Seitenwand um das Speicherbecken verlegt werden. Die Rohre 82 geben als Wärmetauscher Wärme mit gegenüber dem Wärmespeicher niedrigerem Temperaturniveau an den Auffüllboden ab. Diese über die Rohrleitungen 82 in den Boden eingebrachte, insbesondere kurzoder mittelfristig gespeicherte Wärmemenge kann im Bedarfsfall wieder entzogen und einer Wärmepumpe zugeführt werden, um beispielsweise zum Nachladen des Wärmespeichers 50' verwendet werden zu können. Durch die außerhalb des Wärmespeichers entstehenden Zonen unterschiedlicher Wärme im Bereich der Rohrleitungen wird der Temperaturgradient zwischen dem Wärmespeicher und dem umgebenden Boden abgestuft, wodurch sich Wärmeverluste verringern lassen. Bei dieser Ausführungsform kann z.B. die Unterteilung des Wärmespeichers durch Verwendung isolierender Trennwände in unterschiedlicher Temperaturzonen, wie in Fig. 2 dargestellt, entfallen.

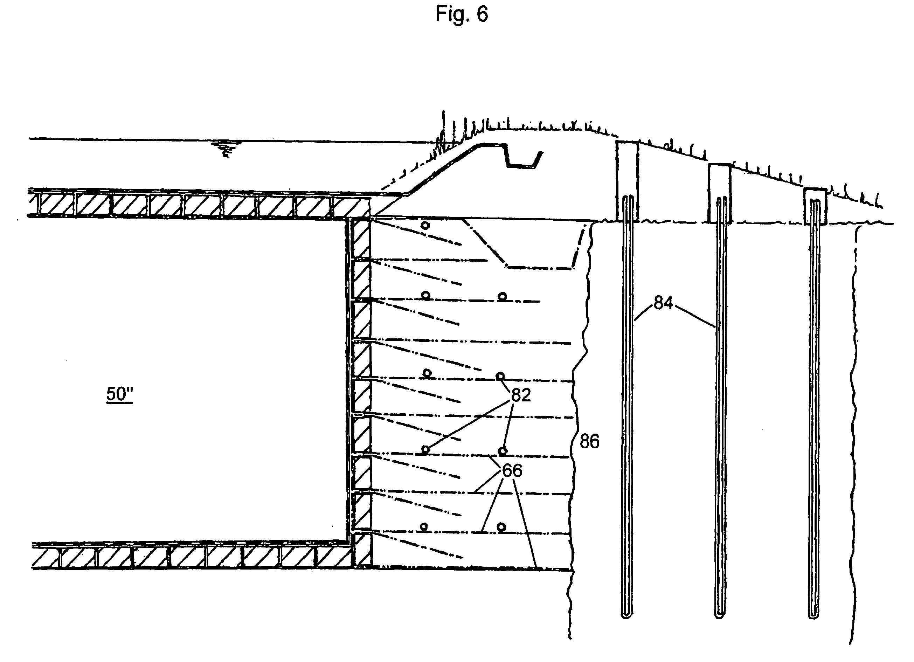

Fig. 6 zeigt eine weitere Ausgestaltung eines Wärmespeichers 50", bei dem die in Fig. 5 dargestellte Ausführungsform um Erdsonden 84 erweitert ist, die sich an den Bereich der Geotextillagen 66 bzw. der in diesem Bereich angeordneten Rohre 82 anschließen. Durch die Verwendung von Erdsonden 84 zusätzlich zu den Rohren 82 kann eine weitere Abstufung des Temperaturgradienten erzeugt werden, wodurch sich Wärmeenergieverluste nochmals verringern lassen. Die Erdsonden 84 können darüber hinaus bereits bei der Herstellung des Wärmespeichers 50, 50' bzw. 50" eingesetzt werden. Dazu wird durch Einblasen von verflüssigten Gasen, z.B. flüssigem Stickstoff, oder durch Umpumpen von Kältesole in die Erdsonden 84 ein vereister Bodenkörper 86 erzeugt, der den Aushub des Bodens im Wärmespeicher und den diesen umschließenden Bodenkörper zwecks Einlegen von Geotextilbahnen 66 ohne weitere Sicherungsmaßnahmen zuläßt. Über die Erdsonden 84 kann demgemäß bereits eine ausreichende Stabilisierung des Erdmaterials erreicht werden, ohne daß man zusätzlich Spundwände einziehen müßte. Erdsonden 84 zur Vereisung des umgebenden Bodens einzusetzen, kann man selbstverständlich auch für die Herstellung von Wärmespeichern 1 bzw. 1', d.h. solchen mit geneigten Seitenwänden, nutzen. Mit Hilfe insbesondere der Doppelfunktion von Erdsonden 84 gelingt eine sehr kostengünstige Herstellung auch komplexer Wärmespeicher, die über einen sehr hohen Wirkungsgrad verfügen, dabei sind hinsichtlich der geometrischen Ausgestaltung des Wärmespeichers keine Einschränkungen zu beachten.

Schließlich eignen sich die technischen Gegebenheiten der erfindungsgemäßen Wärmespeicher auch vorteilhaft zur Anbringung von Rohren, mit denen das Wärmespeichermedium in das oder aus dem Speicherbecken ein- bzw. ausgetragen wird. Insoweit Kunststoffrohre oder mit Kunststoff zumindest bereichsweise beschichtete oder ummantelte Rohre zum Einsatz kommen, können die eingesetzten Kunststoffdichtungsbahnen im Bereich des Rohrdurchstosses durch z.B. die Seitenwand mit der Rohrwandung verschweißt werden. Auch können hierbei coextrudierte Dichtungen zum Einsatz kommen.

## Patentansprüche

1. Wärmespeicher (1,1',50,50',50") zur Speicherung von Wärmeenergie in Form eines Speicherbeckens (2,52) umfassend eine Sohle (6,62), eine umlaufende Seitenwand (8,54) und eine Abdeckung (24,72), wobei die Sohle (6,62) mindestens eine thermische Dämmschicht (10), umfassend geschäumte Körper (14), und mindestens eine Abdichtschicht (16) umfasst, und wobei die Seitenwände (8,54) mindestens eine thermische Dämmschicht (12,56), umfassend geschäumte Körper (14,58), und mindestens eine Abdichtschicht (20,60) umfasst, **dadurch gekennzeichnet, dass** die Abdeckung (24,72) des Speicherbeckens (2,52) mindestens eine die Oberfläche des Wärmespeichers vollständig überdeckende Trägerschicht (26,74), mindestens eine oberhalb der Trägerschicht (26,74) vorliegende thermische Dämmschicht (28,76), umfassend geschäumte Körper, und mindestens eine oberhalb der Dämmschicht (28,76) vorliegende Abdichtschicht (29,78) umfasst.

2. Wärmespeicher nach Anspruch 1, **gekennzeichnet durch** eine im wesentlichen allseitig umlaufende thermische Dämmschicht und/oder eine im wesentlichen allseitig umlaufende Abdichtschicht.

3. Wärmespeicher nach Anspruch 1 oder 2, **dadurch gekennzeichnet, dass** die thermische Dämmschicht, insbesondere großformatige und/oder geschlossenporige, Hartschaumstoffblöcke (14,58), enthaltend expandiertes Polystyrol, umfasst.

4. Wärmespeicher nach einem der vorangehenden Ansprüche, **dadurch gekennzeichnet, dass** die Trägerschicht ein, insbesondere zugfestes, Gewebe, Geotextil und/oder Geogitter umfasst.

5. Wärmespeicher nach einem der vorangehenden Ansprüche, **gekennzeichnet durch** eine zwischen Trägerschicht (26) und Dämmschicht (28) vorliegende Vlies- und/oder Gewebeschicht, insbesondere enthaltend eine Vielzahl an Schlaufen auf der der Dämmschicht (28) zugewandten Seite zur Befestigung der Dämmschicht (28), insbesondere der Hartschaumblöcke (14).

6. Wärmespeicher nach einem der vorangehenden Ansprüche, **gekennzeichnet durch** eine zwischen der Trägersicht (26) und der Dämmschicht (28), insbesondere zwischen der Trägerschicht (26) und der Vlies- und/oder Gewebeschicht, vorliegende Abdichtschicht, insbesondere eine im wesentlichen wasserdichte, flexible Kunststofffolie.

7. Wärmespeicher nach einem der vorangehenden Ansprüche, **dadurch gekennzeichnet, dass** die Neigung der Seitenwände (8) zumindest bereichsweise Werte unterhalb von 50° annimmt.

8. Wärmespeicher nach einem der vorangehenden Ansprüche, **dadurch gekennzeichnet, dass** die auf der Sohle (6) angebrachte Dämmschicht (10) eine Rohdichte im Bereich von 25 bis 35 kg/m³ und/oder die in der Seitenwandung (8) angebrachte Dämmschicht (14) eine Rohdichte im Bereich von etwa 10 bis 20 kg/m³ aufweist bzw. aufweisen.

9. Wärmespeicher nach einem der vorangehenden Ansprüche, **dadurch gekennzeichnet, dass** die Abdichtschicht (20) der Seitenwände (8) in etwa auf der Höhe der maximalen Speicherfüllung, insbesondere in einer das Speicherbecken (2) umgebenden, im wesentlichen horizontalen Fläche, verankerbar ist.

10. Wärmespeicher nach einem der vorangehenden Ansprüche, **gekennzeichnet durch** mindestens eine, insbesondere wärmeisolierte, Trennwand (42), die das Speicherbecken (2) in isolierte Bereiche aufteilt, zwischen denen im wesentlichen kein freier Austausch des Speichermediums stattfindet.

11. Wärmespeicher nach Anspruch 10, **dadurch gekennzeichnet, dass** das Speicherbecken mindestens eine umlaufende Trennwand umfasst.

12. Wärmespeicher nach einem der vorangehenden Ansprüche, **gekennzeichnet durch** mindestens eine Erdsonde (48) benachbart zum Speicherbecken (2), insbesondere mindestens eine Reihe an beabstandeten Erdsonden, vorzugsweise mit dem Speicherbecken koppelbar.

13. Wärmespeicher nach einem der vorangehenden Ansprüche, **dadurch gekennzeichnet, dass** beabstandete Erdsonden (48) um den gesamten Umfang des Speicherbeckens (2) vorliegen.

14. Wärmespeicher nach einem der vorangehenden Ansprüche, **gekennzeichnet durch** mindestens ein Rohr (82) zur Aufnahme und/oder Durchleitung von wärmeaufnehmenden und/oder wärmespeichernden Fluiden, das zumindest bereichsweise beabstandet zu der Seitenwand (54) des Speicherbeckens (52), insbesondere das Speicherbecken (52) teilweise oder vollständig umgebend, vorliegt.

15. Wärmespeicher nach Anspruch 14, **dadurch gekennzeichnet, dass** das Rohr (82) im wesentlichen in dem Bereich zwischen der Seitenwand (54) und der Erdsonde (84) vorliegt.

16. Wärmespeicher nach einem der vorangehenden Ansprüche, **dadurch gekennzeichnet, dass** mindestens eine Seitenwand (54) zumindest bereichsweise im wesentlichen senkrecht ist.

17. Wärmespeicher nach einem der vorangehenden Ansprüche, **gekennzeichnet durch**mindestens eine sich vom Speicherbecken (52) nach außen erstreckende, insbesondere im wesentlichen horizontale, Geotextillage (66), Geogitterlage und/oder ein zugfestes Gewebe, die bzw. das mit der Seitenwand (54) zumindest abschnittsweise, insbesondere im wesentlichen entlang des gesamten Umfangs des Speicherbeckens (52), verbunden ist.

18. Wärmespeicher nach Anspruch 17, **dadurch gekennzeichnet, dass** die Geotextillage (66), das Geogitter oder das zugfeste Gewebe, insbesondere von unten, um einen Hartschaumblock (60) herumgeführt ist, so dass zumindest die Unter-, Ober- und/oder die dem Speicherbecken (52) zugewandte Innenseite des Hartschaumblocks (58) mittelbar oder unmittelbar mit der Geotextillage (66), dem Geogitter oder dem zugfesten Gewebe zumindest bereichsweise umgeben ist bzw. sind, insbesondere in Kontakt steht, und dass insbesondere nach dem Herumführen um den Hartschaumblock (58) ein überstehender Abschnitt (61) der Geotextillage, des Geogitters oder des zugfesten Gewebes verbleibt.

19. Wärmespeicher nach Anspruch 18, **dadurch gekennzeichnet, dass** der überstehende Abschnitt (61) der Geotextillage, des Geogitters oder des zugfesten Gewebes im wesentlichen horizontal oder nach unten geneigt im Boden um das Speicherbecken (52) vorliegt.

20. Wärmespeicher nach einem der Ansprüche 17 bis 19, **dadurch gekennzeichnet, dass** zumindest derjenige Abschnitt der Geotextillage (66), des Geogitters oder des zugfesten Gewebes, der entlang der Innenseite des Hartschaumblocks (58) vorliegt, wenigstens bereichsweise auf der dem Speicherbecken (52) zugewandten Seite eine klettverschließbare Oberfläche aufweist.

21. Wärmespeicher nach einem der vorangehenden Ansprüche, **dadurch gekennzeichnet, dass** die Innenseite der an der Seitenwand vorliegenden Abdichtschicht zumindest bereichsweise eine klettverschließbare Oberfläche aufweist.

22. Wärmespeicher nach einem der Ansprüche 17 bis 21, **dadurch gekennzeichnet, dass** die Geotextillage (66), das Geogitter oder das zugfeste Gewebe zumindest bereichsweise, insbesondere auf ihrer Unterseite, eine Vliesschicht umfasst.

23. Wärmespeicher nach einem der Ansprüche 17 bis 22, **gekennzeichnet durch** mindestens eine mit der Geotextillage, dem Geogitter oder dem zugfesten Gewebe im Verbund vorliegende Vliesschicht.

24. Wärmespeicher nach einem der vorangehenden Ansprüche, **dadurch gekennzeichnet, dass** oberhalb der Abdeckung zumindest bereichsweise Erdreich und/oder ein Teich (30) angeordnet ist.

25. Wärmespeicher nach einem der vorangehenden Ansprüche, **dadurch gekennzeichnet, dass** die Böschung des Teiches (30), insbesondere im wesentlichen in gleicher Weise wie die Seitenwände (8), geneigt ist.

26. Verfahren zur Herstellung eines Wärmespeichers (1,1',50,50',50") nach einem der Ansprüche 1 bis 25, **gekennzeichnet durch** folgende Verfahrensschritte:
a) Aufbringen einer thermischen Dämmschicht (10), insbesondere in Form benachbarter Hartschaumblöcke (14), auf die Sohle (6) eines Speicherbeckens (2),
b) Aufbringen einer thermischen Dämmschicht (12), insbesondere in Form benachbarter Hartschaumblöcke (14), auf die geneigte Seitenwand (8) des Speicherbeckens (2),
c) Auflegen einer einheitlichen, flexiblen, insbesondere im wesentlichen wasserundurchlässigen, Abdichtschicht auf die Dämmschicht von Sohle und Seitenwände oder Auflegen einer einheitlichen, flexiblen, insbesondere im wesentlichen wasserundurchlässigen, Abdichtschicht (16) auf die Dämmschicht (10) der Sohle (6) und Auflegen einer einheitlichen, flexiblen, insbesondere im wesentlichen wasserundurchlässigen, Abdichtschicht (20) auf die Dämmschicht (12) der Seitenwand (8) und Verschweißen von Sohlen- und Seitenwandabdichtschicht;
d) Fortführung der Abdichtschicht (20) der Seitenwand (8), im wesentlichen in horizontaler Ausrichtung, über die obere Seitenwandbegrenzung hinaus zur Verankerung, insbesondere im angrenzenden Erdreich;
e) gegebenenfalls Auffüllen des Speicherbeckens mit dem Speichermedium (22), insbesondere mit Wasser, im wesentlichen bis zur maximalen Befüllung;
f) Anbringen einer die Oberfläche des Wärmespeichers vollständig überdeckenden Trägerschicht (26), insbesondere eines Trägergewebes, auf dem Speicherbecken (2) als Abdeckung (24) desselben;
g) Anbringen einer Dämmschicht (28) auf dem Trägergewebe, insbesondere in Form benachbarter Hartschaumblöcke;
h) Anbringen einer Abdichtschicht (29) auf der Dämmschicht (28);
i) Verankern der Abdichtschicht (20) der Seitenwand (8), der Trägerschicht (26) und/oder der Abdichtschicht (29) der Abdeckung (24) in dem das Speicherbecken (2) umgebenden Areal.

27. Verfahren nach Anspruch 26, **dadurch gekennzeichnet, dass** man eine Vlies- und/oder Gewebeschicht und/oder Abdichtschicht zwischen der Trägerschicht und der Dämmschicht anbringt.

28. Verfahren nach Anspruch 26 oder 27, **dadurch gekennzeichnet, dass** die Seitenwände geneigt oder wenigstens abschnittsweise im wesentlichen senkrecht ausgeführt sind.

29. Verfahren nach einem der Ansprüche 26 bis 28, **dadurch gekennzeichnet, dass** man mindestens eine Geotextillage (66), ein Geogitter und/oder ein zugfestes Gewebe, insbesondere in im wesentlichen horizontaler Ausrichtung, benachbart zur Seitenwand und in Verbindung mit dieser bzw. diesem im Erdreich anbringt, insbesondere indem man die Geotextillage, das Geogitter oder das zugfeste Gewebe, insbesondere von unten, um einen Hartschaumblock (60) herumführt, so dass zumindest die Unter-, Ober- und die dem Speicherbecken zugewandte Innenseite des Hartschaumblocks mittelbar oder unmittelbar mit der Geotextillage, dem Geogitter oder dem zugfesten Gewebe zumindest bereichsweise umgeben sind, insbesondere in Kontakt steht, und dass der nach dem Herumführen um den Hartschaumblock verbleibende überstehende Abschnitt (61) der Geotextillage oder des zugfesten Gewebes in Richtung des umgebenden Erdreichs, vorzugsweise horizontal oder nach unten geneigt, zurückgeführt, insbesondere verankert, wird.

## Claims

1. Heat accumulator (1, 1', 50, 50', 50") for the storage of heat energy in the form of a storage reservoir (2, 52), comprising a bottom (6, 62), a peripheral side wall (8, 54) and a cover (24, 72), wherein the bottom (6, 62) comprises at least one thermal insulating layer (10) comprising foamed bodies (14) and at least one sealing layer (16), and whereby the side walls (8, 54) comprise at least one thermal insulating layer (12, 56), comprising foamed bodies (14, 58) and at least one sealing layer (20, 60), **characterised in that** the cover (24, 72) of the storage reservoir (2, 52) has at least one carrier layer (26, 74) completely covering the surface of the heat accumulator, at least one thermal insulating layer (28, 76) above the carrier layer (26, 74), comprising foamed bodies, and at least one sealing layer (29, 78) above the insulating layer (28, 76).

2. Heat accumulator according to claim 1, **characterised by** a thermal insulating layer which essentially runs around all sides and/or a sealing layer which essentially runs around all sides.

3. Heat accumulator according to claim 1 or 2, **characterised in that** the thermal insulating layer comprises hard foam, in particular large-format and/or closed-pore, blocks (14, 58) containing expanded polystyrene.

4. Heat accumulator according to one of the preceding claims, **characterised in that** the carrier layer comprises a fabric, geotextile and/or geomesh, in particular with a high tensile strength.

5. Heat accumulator according to one of the preceding claims, **characterised by** a layer of fleece and/or fabric installed between carrier layer (26) and insulating layer (28), in particular containing a plurality of loops on the side facing the insulating layer (28) for fastening the insulating layer (28), in particular the hard foam blocks (14).

6. Heat accumulator according to one of the preceding claims, **characterised by** a sealing layer installed between the carrier layer (26) and the insulating layer (28), in particular between the carrier layer (26) and the layer of fleece and/or fabric, in particular an essentially watertight, flexible plastic film.

7. Heat accumulator according to one of the preceding claims, **characterised in that** the inclination of the side walls (8), at least in parts, adopts values of under 50°.

8. Heat accumulator according to one of the preceding claims, **characterised in that** the insulating layer (10) installed on the bottom (6) has a bulk density in the range of 25-35 kg/m³ and/or the insulating layer (14) attached to the side wall (8) has or have respectively a bulk density in the range of about 10-20 kg/m³.

9. Heat accumulator according to one of the preceding claims, **characterised in that** the sealing layer (20) of the side walls (8) can be anchored to approximately the height of the maximum storage filling, in particular in an essentially horizontal area surrounding the storage reservoir (2).

10. Heat accumulator according to one of the preceding claims, **characterised by** at least one, in particular thermally insulated, partition wall (42), which divides the storage reservoir (2) into isolated parts, between which in essence no free exchange of the storage medium takes place.

11. Heat accumulator according to claim 10, **characterised in that** the storage reservoir comprises at least one surrounding partition wall.

12. Heat accumulator according to one of the preceding claims, **characterised by** at least one geothermal probe (48) adjacent the storage reservoir (2), in particular at least one row of geothermal probes at intervals, preferably couplable with the storage reservoir.

13. Heat accumulator according to one of the preceding claims, **characterised in that** geothermal probes (48) are arranged at intervals around the entire perimeter of the storage reservoir (2).

14. Heat accumulator according to one of the preceding claims, **characterised by** at least one pipe (82) for absorbing and/or conducting heat-absorbing and/or heat-storing fluids, which is installed at least partly at a distance from the side wall (54) of the storage reservoir (52), in particular partly or completely surrounding the storage reservoir (52).

15. Heat accumulator according to claim 14, **characterised in that** the pipe (82) is installed essentially in the area between the side wall (54) and the geothermal probe (48).

16. Heat accumulator according to one of the preceding claims, **characterised in that** at least one side wall (54) is at least partly essentially vertical.

17. Heat accumulator according to one of the preceding claims, **characterised by** at least one layer of geotextile (66), layer of geomesh and/or a high tensile strength fabric extending outwards from the storage reservoir (52), in particular essentially horizontally, which is connected with the side wall (54) at least in parts, in particular essentially along the entire perimeter of the storage reservoir (52).

18. Heat accumulator according to claim 17, **characterised in that** the layer of geotextile (66), the geomesh or the high tensile strength fabric, in particular from underneath, is guided around a hard foam block (60) so that at least the bottom, top and/or the inside of the hard foam block (58) facing towards the storage reservoir (52) is or are at least partly surrounded indirectly or directly by the layer of geotextile (66), the geomesh or the high tensile strength fabric, in particular in contact therewith, and that in particular after being guided around the hard foam block (58), an outstanding section (61) of the layer of geotextile, of the geomesh or of the high tensile strength fabric remains.

19. Heat accumulator according to claim 18, **characterised in that** the outstanding section (61) of the layer of geotextile, of the geomesh or of the high tensile strength fabric lies essentially horizontally or slanted downwards in the ground around the storage reservoir (52).

20. Heat accumulator according to one of claims 17 to 19, **characterised in that** at least that section of the layer of geotextile (66), of the geomesh or of the high tensile strength fabric which lies along the inside of the hard foam block (58), at least partly on the side facing the storage reservoir (52), has a surface which can be closed by hook-and-loop fasteners.

21. Heat accumulator according to one of the preceding claims, **characterised in that** the inside of the sealing layer installed on the side wall has a surface which can be closed by hook-and-loop fasteners, at least in parts.

22. Heat accumulator according to one of claims 17 to 21, **characterised in that** the layer of geotextile (66), the geomesh or the high tensile strength fabric comprises a layer of fleece, at least in part, in particular on its underside.

23. Heat accumulator according to one of claims 17 to 22, **characterised by** at least one layer of fleece sandwiched with the layer of geotextile, the geomesh or the high tensile strength fabric.

24. Heat accumulator according to one of the preceding claims, **characterised in that** at least in part, earth and/or a pond (30) is arranged above the cover.

25. Heat accumulator according to one of the preceding claims, **characterised in that** the talus of the pond (30) slopes, in particular in essentially the same way as the side walls (8).

26. Method for producing a heat accumulator (1, 1', 50, 50', 50") according to one of claims 1 to 25, **characterised by** the following method steps:
a) application of a thermal insulating layer (10), in particular in the form of adjacent hard foam blocks (14), to the bottom (6) of a storage reservoir (2),
b) application of a thermal insulating layer (12), in particular in the form of adjacent hard foam blocks (14), on the sloping side wall (8) of the storage reservoir (2),
c) laying of a uniform, flexible, in particular essentially waterproof sealing layer onto the insulating layer of bottom and side walls, or laying a uniform, flexible, in particular essentially waterproof sealing layer (16) onto the insulating layer (10) of the bottom (6) and laying of a uniform, flexible, in particular essentially waterproof sealing layer (20) on the insulating layer (12) of the side wall (8) and welding of bottom and side wall sealing layer;
d) continuation of the sealing layer (20) of the side wall (8) essentially in the horizontal orientation, beyond the upper limit of the side wall to the anchorage, in particular in the adjacent earth;
e) filling up the storage reservoir as required with the storage medium (22), in particular with water, essentially up to the maximum fill level;
f) attaching a carrier layer (26), in particular a layer of carrier fabric, which completely covers the surface of the heat accumulator, on the storage reservoir (2) as cover (24) thereof;
g) attaching an insulating layer (28) on the carrier fabric, in particular in the form of adjacent hard foam blocks;
h) attaching a sealing layer (29) on the insulating layer (28);
i) anchoring the sealing layer (20) of the side wall (8), the carrier layer (26) and/or the sealing layer (29) of the cover (24) in the area surrounding the storage reservoir (2).

27. Method according to claim 26, **characterised in that** a fleece and/or fabric layer and/or sealing layer is attached between the carrier layer and the insulating layer.

28. Method according to claim 26 or 27, **characterised in that** the side walls are designed to be sloping or at least partly essentially perpendicular.

29. Method according to one of claims 26 to 28, **characterised in that** at least one layer of geotextile (66), a geomesh and/or a high tensile strength fabric, in particular in essentially horizontal orientation, is attached adjacent the side wall and in contact therewith or is attached in the earth, in particular by guiding the layer of geotextile, the geomesh or the high tensile strength fabric, in particular from below, around a hard foam block (60), so that at least the lower, the upper and the inner side of the hard foam block facing the storage reservoir are indirectly or directly, at least in parts, surrounded by the layer of geotextile, the geomesh or the high tensile strength fabric, in particular in contact, and that the projecting section (61) of the layer of geotextile or of the high tensile strength fabric remaining after passing around the hard foam block is passed back in the direction of the surrounding earth, preferably horizontally or sloping downwards, in particular is anchored.

## Revendications

1. Accumulateur thermique (1, 1', 50, 50', 50") destiné à accumuler de l'énergie thermique sous la forme d'un réservoir d'accumulation (2, 52) comprenant une sole (6, 62), une paroi latérale périphérique (8, 54) et une couverture (24, 72), la sole (6, 62) comprenant au moins une couche d'isolation thermique (10), comprenant des corps en mousse (14), et au moins une couche d'étanchéité (16), et les parois latérales (8, 54) comprenant au moins une couche d'isolation thermique (12, 56) comprenant des corps en mousse (14, 58), et au moins une couche d'étanchéité (20, 60), **caractérisé en ce que** la couverture (24, 72) du réservoir d'accumulation (2, 52) comprend au moins une couche de support (26, 74) recouvrant complètement la surface de l'accumulateur thermique, au moins une couche d'isolation thermique (28, 76) présente au-dessus de la couche de support (26, 74), comprenant des corps en mousse, et au moins une couche d'étanchéité (29, 78) présente au-dessus de la couche d'isolation (28, 76).

2. Accumulateur thermique selon la revendication 1, **caractérisé par** une couche d'isolation thermique entourant essentiellement tous les côtés et/ou une couche d'étanchéité entourant essentiellement tous les côtés.

3. Accumulateur thermique selon la revendication 1 ou 2, **caractérisé en ce que** la couche d'isolation thermique, comprend des blocs de mousse dure (14, 58), en particulier de grand format et/ou à cellules fermées, contenant du polystyrène expansé.

4. Accumulateur thermique selon l'une quelconque des revendications précédentes, **caractérisé en ce que** la couche de support comprend un tissu, un géotextile et/ou une géogrille, en particulier résistant à la traction.

5. Accumulateur thermique selon l'une quelconque des revendications précédentes, **caractérisé par** une couche de tissu et/ou d'intissé présente entre la couche de support (26) et la couche d'isolation (28), contenant en particulier une pluralité de boucles sur le côté tourné vers la couche d'isolation (28) en vue de la fixation de la couche d'isolation (28), en particulier des blocs de mousse dure (14).

6. Accumulateur thermique selon l'une quelconque des revendications précédentes, **caractérisé par** une couche d'étanchéité présente entre la couche de support (26) et la couche d'isolation (28), en particulier entre la couche de support (26) et la couche de tissu et/ou d'intissé, en particulier une feuille de matière plastique flexible essentiellement imperméable à l'eau.

7. Accumulateur thermique selon l'une quelconque des revendications précédentes, **caractérisé en ce que** l'inclinaison des parois latérales (8) admet des valeurs au moins localement inférieures à 50°.

8. Accumulateur thermique selon l'une quelconque des revendications précédentes, **caractérisé en ce que** la couche d'isolation (10) installée sur la sole (6) présente une densité volumétrique dans la plage de 25 à 35 kg/m³ et/ou la couche d'isolation (14) installée dans la paroi latérale (8) présente une densité volumétrique dans la plage d'environ 10 à 20 kg/m³.

9. Accumulateur thermique selon l'une quelconque des revendications précédentes, **caractérisé en ce que** la couche d'étanchéité (20) des parois latérales (8) peut être ancrée à peu près à hauteur du remplissage maximal d'accumulateur, en particulier au niveau d'une surface essentiellement horizontale entourant le réservoir d'accumulation (2).

10. Accumulateur thermique selon l'une quelconque des revendications précédentes, **caractérisé par** au moins une cloison (42), en particulier isolée thermiquement, qui divise le réservoir d'accumulation (2) en secteurs isolés, entre lesquels n'a lieu essentiellement aucun échange libre du milieu d'accumulation.

11. Accumulateur thermique selon la revendication 10, **caractérisé en ce que** le réservoir d'accumulation comprend au moins une cloison périphérique.

12. Accumulateur thermique selon l'une quelconque des revendications précédentes, **caractérisé par** au moins une sonde géothermique (48) adjacente au réservoir d'accumulation (2), en particulier au moins une série de sondes géothermiques espacées, pouvant de préférence être couplée avec le réservoir d'accumulation.

13. Accumulateur thermique selon l'une quelconque des revendications précédentes, **caractérisé en ce que** des sondes géothermiques (48) espacées sont présentes autour de la totalité de la périphérie du réservoir d'accumulation (2).

14. Accumulateur thermique selon l'une quelconque des revendications précédentes, **caractérisé par** au moins un tube (82) destiné à recevoir et/ou acheminer des fluides absorbant la chaleur et/ou accumulant la chaleur, qui est présent de manière au moins localement espacée par rapport à la paroi latérale (54) du réservoir d'accumulation (52) et entoure en particulier le réservoir d'accumulation (52) de manière partielle ou complète.

15. Accumulateur thermique selon la revendication 14, **caractérisé en ce que** le tube (82) est présent essentiellement dans le secteur compris entre la paroi latérale (54) et la sonde géothermique (84).

16. Accumulateur thermique selon l'une quelconque des revendications précédentes, **caractérisé en ce qu'**au moins une paroi latérale (54) est au moins localement essentiellement verticale.

17. Accumulateur thermique selon l'une quelconque des revendications précédentes, **caractérisé par** au moins une nappe de géotextile (66), une nappe de géogrille et/ou un tissu résistant à la traction, s'étendant vers l'extérieur depuis le réservoir d'accumulation (52), en particulier essentiellement horizontal(e), qui est relié(e) avec la paroi latérale (50) au moins par section, en particulier essentiellement le long de la totalité du pourtour du réservoir d'accumulation (52).

18. Accumulateur thermique selon la revendication 17, **caractérisé en ce que** la nappe de géotextile (66), la géogrille ou le tissu résistant à la traction, est placé(e) autour d'un bloc de mousse dure (60), en particulier depuis le bas, de sorte qu'au moins la face inférieure, la face supérieure et/ou la face intérieure tournée vers le réservoir d'accumulation (52), du bloc de mousse dure (58) est ou sont entourée(s) et sont en particulier en contact avec eux au moins localement directement ou indirectement par la nappe de géotextile (66), la géogrille ou le tissu résistant à la traction, et une section (61) supérieure de la nappe de géotextile, de la géogrille ou du tissu résistant à la traction demeure autour du bloc de mousse dure (58) en particulier après avoir été passé autour.

19. Accumulateur thermique selon la revendication 18, **caractérisé en ce que** la section (61) supérieure de la nappe de géotextile, de la géogrille ou du tissu résistant à la traction est présente de manière essentiellement horizontale ou inclinée vers le bas dans le fond autour du réservoir d'accumulation (52).

20. Accumulateur thermique selon l'une quelconque des revendications 17 à 19, **caractérisé en ce qu'**au moins chaque section de la nappe de géotextile (66), de la géogrille ou du tissu résistant à la traction, qui est présente le long de la face intérieure du bloc de mousse dure (58) présente au moins localement une surface pouvant être attachée par Velcro (nom commercial déposé) sur la face tournée vers le réservoir d'accumulation (52).

21. Accumulateur thermique selon l'une quelconque des revendications précédentes, **caractérisé en ce que** la face intérieure de la couche d'étanchéité au niveau de la paroi latérale présente au moins localement une surface pouvant être fermée par Velcro.

22. Accumulateur thermique selon l'une quelconque des revendications 17 21, **caractérisé en ce que** la nappe de géotextile (66), la géogrille ou le tissu résistant à la traction comprend au moins localement une couche d'intissé, en particulier sur sa face inférieure.

23. Accumulateur thermique selon l'une quelconque des revendications 17 à 22, **caractérisé par** au moins une couche d'intissé présente en liaison avec la nappe de géotextile, la géogrille ou le tissu résistant à la traction.

24. Accumulateur thermique selon l'une quelconque des revendications précédentes, **caractérisé en ce qu'**un terrain et/ou un étang (30) est disposé au moins localement au-dessus de la couverture.

25. Accumulateur thermique selon l'une quelconque des revendications précédentes, **caractérisé en ce que** le bord de l'étang (30) est incliné, en particulier de manière essentiellement identique aux parois latérales (8).

26. Procédé de fabrication d'un accumulateur thermique (1, 1', 50, 50', 50") selon l'une quelconque des revendications 1 à 25, **caractérisé par** les étapes de procédé suivantes consistant à :
a) mettre en place une couche d'isolation thermique (10), en particulier sous la forme de blocs de mousse dure (14) adjacents, sur la sole (6) d'un réservoir d'accumulation (2),
b) mettre en place une couche d'isolation thermique (12), en particulier sous la forme de blocs de mousse dure (14) adjacents, sur la paroi latérale (8) inclinée du réservoir d'accumulation (2),
c) appliquer une couche d'étanchéité unitaire, flexible, en particulier essentiellement imperméable à l'eau, sur la couche d'isolation de la sole et des parois latérales ou appliquer une couche d'étanchéité (16) unitaire, flexible, en particulier essentiellement imperméable à l'eau, sur la couche d'isolation (10) de la sole (6) et appliquer une couche d'étanchéité (20) unitaire, flexible, en particulier essentiellement imperméable à l'eau sur la couche d'isolation (12) de la paroi latérale (8) et souder la couche d'étanchéité de sole et la couche d'étanchéité de paroi latérale ;
d) poursuivre la couche d'étanchéité (20) de la paroi latérale (8), essentiellement en direction horizontale, par-dessus la limite supérieure de paroi latérale en vue d'un ancrage, en particulier dans le terrain avoisinant ;
e) remplir éventuellement le réservoir d'accumulation avec le milieu d'accumulation (22), en particulier avec de l'eau, essentiellement jusqu'à remplissage maximal ;
f) fixer une couche de support (26) recouvrant complètement la surface du réservoir d'accumulation, en particulier un tissu de support, sur le réservoir d'accumulation (2) en tant que couverture (24) de celui-ci ;
g) fixer une couche d'isolation (28) sur le tissu de support, en particulier sous la forme de blocs de mousse dure adjacents ;
h) fixer une couche d'étanchéité (29) sur la couche d'isolation (28) ;
i) ancrer la couche d'étanchéité (20) de la paroi latérale (8), de la couche de support (26) et/ou de la couche d'étanchéité (29) de couverture (24) dans la zone entourant le réservoir d'accumulation (2).

27. Procédé selon la revendication 26, **caractérisé en ce qu'**une couche de tissu et/ou d'intissé et/ou une couche d'étanchéité est fixée entre la couche de support et la couche d'isolation.

28. Procédé selon la revendication 26 ou 27, **caractérisé en ce que** les parois latérales sont réalisées de manière penchée ou au moins par section essentiellement verticale.

29. Procédé selon l'une quelconque des revendications 26 à 28, **caractérisé en ce qu'**au moins une nappe de géotextile (66), une géogrille et/ou un tissu résistant à la traction, est fixé(e) dans le terrain, en particulier avec une orientation essentiellement horizontale, de manière adjacente à la paroi latérale et en liaison avec celle-ci, en particulier en faisant passer la nappe de géotextile, la géogrille ou le tissu résistant à la traction autour d'un bloc de mousse dure (60), en particulier depuis le bas, de sorte qu'au moins la face inférieure, la face supérieure et la face intérieure tournée vers le réservoir d'accumulation, du bloc de mousse dure sont entourées au moins localement, en particulier sont en contact, directement ou indirectement avec la nappe de géotextile, la géogrille ou le tissu résistant à la traction, et la section (61), de la nappe de géotextile ou du tissu résistant à la traction qui demeure au-dessus après le passage autour du bloc de mousse dure, est ramenée, en particulier ancrée, en direction du terrain environnant, de préférence de manière horizontale ou inclinée vers le bas.
